# EUROPÄISCHE PATENTSCHRIFT

(11) **EP 2 075 080 B1**
(45) Veröffentlichungstag und Bekanntmachung des Hinweises auf die Patenterteilung: **04.05.2011**
(21) Anmeldenummer: 08020551.1
(22) Anmeldetag: 26.11.2008
(51) Int. Cl.: B23D 49/16, B23Q 9/00

(54) **Bearbeitungssystem**
Processing system
Système de traitement

(30) Priorität: 24.12.2007 DE 102007062677
(43) Veröffentlichungstag der Anmeldung: 01.07.2009
(73) Patentinhaber: Mafell AG, 78727 Oberndorf (DE)
(72) Erfinder: Götz, Albert, 72160 Horb (DE); Hermle, Hans, 78661 Dietingen (DE); Richter, Manfred, 72189 Vöhringen (DE)
(74) Vertreter: Manitz, Finsterwald & Partner GbR

(56) Entgegenhaltungen:
- WO-A-2004/082910
- DE-U1- 9 420 679
- US-A- 3 277 934
- US-A1- 2003 233 926

## Beschreibung

Die Erfindung betrifft ein Bearbeitungssystem mit einer elektrischen Bearbeitungsmaschine und einem Führungssystem für die Maschine. Die Erfindung betrifft außerdem eine elektrische Bearbeitungsmaschine mit wenigstens einer Grundplatte. Ferner betrifft die Erfindung eine Führungseinrichtung für eine elektrische Bearbeitungsmaschine.

Elektrische Bearbeitungsmaschinen, wie beispielsweise Stichsägen und Handkreissägen, werden in der Praxis häufig sowohl mit Führungsschiene als auch ohne Führungsschiene verwendet. Beim Arbeiten ohne Führungsschiene liegt die Maschine mit ihrer Unterseite unmittelbar auf der Werkstückoberfläche auf. Auch bei einem geführten Arbeiten kann die Maschine unmittelbar auf dem Werkstück aufliegen, wenn die Maschine über einen so genannten Parallelanschlag mit einer Führung zusammenwirkt. Ein solches Arbeiten "neben der Schiene" führt allerdings in der Praxis häufig zu hinsichtlich der Genauigkeit ungenügenden Arbeitsergebnissen. Beim Arbeiten "auf der Schiene" befindet sich die Unterseite der Maschine in einem Abstand von der Werkstückoberfläche, die der Dicke der Führungsschiene entspricht. Daher ist es wünschenswert, wenn die Maschine in unterschiedlichen Höhenniveaus bezüglich der Oberfläche des zu bearbeitenden Werkstücks jeweils ein geführtes Arbeiten ermöglichen würde. Eine besondere Situation besteht in Verbindung mit Maschinen, wie beispielsweise Stichsägen, bei denen das Werkzeug - bezogen auf eine Richtung senkrecht zur Arbeitsrichtung der Maschine - nicht ganz am Rand der Maschine angeordnet ist. Bei solchen Maschinen ist deren Auflagefläche auf beiden Seiten des Werkzeugs vorhanden, was bei der Konzeption einer Maschinenführung berücksichtigt werden muss. Bei Handkreissägen beispielsweise ist die Situation eine andere, da das Sägeblatt bei einer Handkreissäge nicht irgendwo "in der Auflagefläche", sondern ganz am Rand angeordnet ist. Ferner ist zu berücksichtigen, dass manche Bearbeitungsmaschinen dazu in der Lage sein müssen, so genannte Neigungs- oder Gehrungsschnitte auszuführen, d.h. das Werkzeug muss gegenüber dem zu bearbeitenden Werkstück gekippt werden können. Auch dies muss bei der Konzeption einer Maschinenführung berücksichtigt werden.

In der US 2003/0233926 A1 ist ein Führungssystem für elektrische Holzbearbeitungsmaschinen offenbart, das auf einer Führungsschiene mit mehreren sich in Längsrichtung der Schiene erstreckenden Ausnehmungen beruht. In die Ausnehmungen kann beispielsweise der Haltearm einer Klemmvorrichtung eingreifen oder es kann ein Führungsstab in eine der Ausnehmungen eingesetzt werden.

Aufgabe der Erfindung ist es, die vorstehend genannten Anforderungen zu erfüllen.

Die Lösung dieser Aufgabe erfolgt erfindungsgemäß durch die Merkmale der unabhängigen Ansprüche 1 und 11.

Das erfindungsgemäße Bearbeitungssystem umfasst ein Führungssystem, das wenigstens eine Grundplatte der Maschine, zumindest eine Führungsschiene und wenigstens einen mit der Maschine, insbesondere der Grundplatte, koppelbaren, insbesondere als Parallelanschlag ausgebildeten, Ausleger umfasst, wobei das Führungssystem derart ausgebildet ist, dass die Maschine sowohl bei unmittelbar auf einem zu bearbeitenden Werkstück aufliegender als auch bei unmittelbar auf der Führungsschiene aufliegender Grundplatte in einer durch die Führungsschiene geführten Weise betreibbar ist.

Erfindungsgemäß weist der Ausleger wenigstens zwei ebene Auflageflächen auf und ist in wenigstens zwei Orientierungen relativ zur Führungsschiene verwendbar, die sich hinsichtlich der Höhendifferenz zwischen der Unterseite der Führungsschiene und der jeweils wirksamen Auflagefläche voneinander unterscheiden.

Gemäß einer Ausführungsform ist vorgesehen, dass diese wenigstens eine Grundplatte mit einer ebenen Unterseite aufweist, in der wenigstens zwei mit Abstand voneinander angeordnete Führungsnuten für jeweils einen Führungssteg der Führungsschiene ausgebildet sind.

Gemäß einer weiteren Ausführungsform ist vorgesehen, dass die Maschine wenigstens eine Grundplatte umfasst, die eine ebene Unterseite aufweist, wobei ein Werkzeug der Maschine derart außermittig bezüglich der Grundplatte angeordnet ist, dass auf beiden Seiten des Werkzeugs ein als Auflagefläche dienender Bereich der Unterseite der Grundplatte vorhanden ist, wobei die Auflagefläche auf der einen Seite des Werkzeugs breiter ist als auf der anderen Seite des Werkzeugs.

Gemäß einer weiteren Ausführungsform ist vorgesehen, dass die Maschine wenigstens eine Grundplatte umfasst, die lösbar mit der Maschine koppelbar ist, wobei die Koppelung zwischen Maschine und Grundplatte dazu ausgebildet ist, die Maschine wahlweise in zwei unterschiedlichen, entgegengesetzten Arbeitsrichtungen entsprechenden Orientierungen relativ zur Grundplatte zu verwenden.

Wenn im Folgenden in Verbindung mit der Erfindung von einer "symmetrischen" Maschine die Rede ist, dann ist darunter allgemein eine Anordnung des Werkzeugs bezüglich der Grundplatte zu verstehen, bei der - anders als z.B. bei einer Kreissäge - die Grundplatte zu beiden Seiten des Werkzeugs eine Auflagefläche aufweist, wobei das Werkzeug aber nicht zwingend mittig bezüglich der Auflagefläche angeordnet zu sein braucht. Für diesen einen unabhängigen Aspekt der Erfindung darstellenden Gedanken einer einerseits zwar außermittigen, andererseits aber noch ausreichend Auflagefläche belassenden Anordnung der Maschine auf der Grundplatte wird im Rahmen dieser Anmeldung unabhängig Schutz beansprucht. Alle in dieser Anmeldung offenbarten und insbesondere in den Ansprüchen erwähnten Einzelaspekte können einzeln oder in Kombination mit diesem unabhängigen Aspekt der Erfindung kombiniert werden.

Bevorzugte Ausführungsformen der Erfindung sind auch in den abhängigen Ansprüchen, der Beschreibung sowie der Zeichnung angegeben.

Wie vorstehend bereits angedeutet, kann die Maschine bzw. deren Werkzeug entweder mittig oder außermittig bezüglich der Grundplatte bzw. deren als Auflagefläche dienender Unterseite angeordnet sein. Hierbei bedeutet "außermittig" nicht zwingend eine Anordnung am Rand, wie bei einer herkömmlichen Kreissäge, sondern derart, dass auf beiden Seiten des Werkzeugs ausreichend Auflagefläche verbleibt.

In einem Ausführungsbeispiel weist die Grundplatte der Maschine eine ebene Unterseite auf, in der wenigstens eine Führungsnut für einen Führungssteg der Führungsschiene ausgebildet ist. Hierdurch kann die Maschine sowohl unmittelbar auf das Werkstück aufgesetzt als auch mit auf der Führungsschiene aufliegender Grundplatte betrieben werden.

Bevorzugt ist die Grundplatte mit wenigstens zwei mit Abstand voneinander angeordneten Führungsnuten versehen, wobei insbesondere die Führungsnuten symmetrisch bezüglich eines, insbesondere mittig an der Maschine angeordneten, Werkzeugs der Maschine oder asymmetrisch bezüglich eines, insbesondere außermittig an der Maschine angeordneten, Werkzeugs der Maschine positioniert sind. Generell kann hierdurch eine Führung und/oder seitliche Abstützung der Maschine mehrfach und insbesondere auf beiden Seiten des Werkzeugs erfolgen. Bei symmetrischer Anordnung der Führungsnuten kann die Maschine komplett mit Grundplatte richtungsunabhängig eingesetzt werden. Eine asymmetrische Anordnung der Führungsnuten ist insbesondere dann vorteilhaft, wenn die Maschine auf der Grundplatte umsetzbar, mit anderen Worten "auf Umschlag" verwendbar ist. Von Vorteil ist dies insbesondere bei Grundplatten, die ein Verschwenken der Maschine erfordern.

Gemäß einem weiteren Ausführungsbeispiel der Erfindung weist der Ausleger wenigstens zwei ebene Auflageflächen auf, wobei der Ausleger in zwei Orientierungen relativ zur Maschine verwendbar ist, die sich hinsichtlich der Höhendifferenz zwischen der Unterseite der Grundplatte und der jeweils wirksamen Auflagefläche voneinander unterscheiden. Hierdurch ergibt sich eine vielseitige Verwendbarkeit des Auflegers.

Besonders bevorzugt ist es, wenn die Höhendifferenz gleich der Dicke der Führungsschiene ist. Hierdurch ermöglicht es der Ausleger, die mit der Unterseite ihrer Grundplatte unmittelbar auf das Werkstück aufgesetzte Maschine mittels des Auslegers an einer neben der Maschine positionierten Führungsschiene zu führen. Mit dem gleichen Ausleger kann eine Führung und/oder seitliche Abstützung der Maschine in Situationen erzielt werden, in denen die Unterseite der Grundplatte und die Auflagefläche des Auslegers in einer gemeinsamen Ebene liegen.

Dies ist beispielsweise dann der Fall, wenn die Maschine mit ihrer Grundplatte unmittelbar auf die Werkstückoberfläche aufgesetzt wird und die Maschine zusätzlich seitlich abgestützt und/oder geführt werden soll. Der Ausleger kann in seiner einen Orientierung mit der Führungsschiene und in seiner anderen Orientierung auf der anderen Seite der Maschine mit der Oberfläche des Werkstücks zusammenwirken. In einem anderen Anwendungsfall wird die Maschine mit ihrer Unterseite auf die Führungsschiene aufgesetzt, wobei der Ausleger mit seiner in dieser Orientierung wirksamen Auflagefläche ebenfalls auf der Führungsschiene aufliegt, um beispielsweise für die Führung der Maschine an der Führungsschiene zu sorgen.

In einem Ausführungsbeispiel verlaufen die beiden Auflageflächen des Auslegers in parallel zueinander versetzten Ebenen. Der Ausleger muss folglich umgedreht, d.h. um 180° gedreht, werden, um von der einen Benutzungskonfiguration in die andere zu wechseln.

Besonders bevorzugt ist es, wenn in den Auflageflächen des Auslegers jeweils wenigstens eine Führungsnut für einen Führungssteg der Führungsschiene ausgebildet ist. Hierdurch kann der Ausleger sowohl mit einer ebenen Fläche, insbesondere der Oberfläche des zu bearbeitenden Werkstücks, als auch mit einem einen entsprechenden Führungssteg aufweisenden Führungsmittel, insbesondere einer Führungsschiene, zusammenwirken.

Bevorzugt ist der Ausleger auf beiden Seiten der Maschine verwendbar.

In einem weiteren Ausführungsbeispiel ist vorgesehen, dass die Führungsschiene auf ihrer Oberseite wenigstens einen Führungssteg aufweist. Abgesehen davon, dass hierdurch eine Grundplatte, deren Führungsnuten mittensymmetrisch angeordnet sind, richtungsunabhängig eingesetzt werden kann, ermöglicht es der Führungssteg außerdem, die Maschine entweder über ihre mit einer entsprechenden Führungsnut versehene Grundplatte oder über den mit einer entsprechenden Führungsnut versehenen, mit der Maschine bzw. der Grundplatte gekoppelten Ausleger zu führen.

In einem weiteren Ausführungsbeispiel der Erfindung kann zusätzlich ein Ausgleichselement vorgesehen sein, das bei mit einer Seite auf der Führungsschiene aufliegender Grundplatte unter deren anderer Seite montierbar ist und eine ebene Unterseite aufweist, die mit der Unterseite der Führungsschiene in einer Ebene liegt.

Ein derartiger Höhenausgleich ist insbesondere dann von Nutzen, wenn es sich um eine so genannte "symmetrische" Maschine handelt und diese mit einem auf der einen Seite des Werkzeugs gelegenen Bereich ihrer Unterseite auf eine Führungsschiene aufgesetzt wird und es erforderlich ist, auf der anderen Seite des Werkzeugs eine Abstützung der Maschine insbesondere an der Werkstückoberfläche vorzunehmen.

Gemäß einem weiteren Ausführungsbeispiel der Erfindung ist eine Mehrzahl von Grundplatten vorgesehen, die jeweils lösbar mit der Maschine koppelbar sind. Zum einen wird es hierdurch beispielsweise ermöglicht, die Maschine wahlweise mit einer Grundplatte, die kein Verschwenken der Maschine ermöglicht, oder mit einer Grundplatte zu betreiben, die eine Schwenkeinrichtung für die Maschine aufweist, um insbesondere Neigungs- oder Gehrungsschnitte ausführen zu können.

Bei entsprechender Ausgestaltung des Kopplungsmechanismus zwischen Maschine und Grundplatte wird hierdurch zum anderen die Möglichkeit eröffnet, die Grundplatte auf Umschlag zu verwenden, d.h. die Maschine von der Grundplatte abzunehmen, um 180° zu drehen und wieder mit der Grundplatte zu verbinden. Die Kopplungseinrichtung zwischen Maschine und Grundplatte ist insofern also symmetrisch ausgebildet.

Für dieses einen unabhängigen Aspekt der Erfindung darstellende Prinzip der Umsetzbarkeit der Maschine auf der Grundplatte wird im Rahmen dieser Anmeldung unabhängig Schutz beansprucht. Alle in dieser Anmeldung offenbarten und insbesondere in den Ansprüchen erwähnten Einzelaspekte können einzeln oder in Kombination mit diesem unabhängigen Aspekt der Erfindung kombiniert werden.

Sinnvoll ist diese Umsetzbarkeit der Maschine insbesondere dann, wenn die Maschine bzw. deren Werkzeug außermittig bezüglich der Grundplatte bzw. deren als Auflagefläche dienender Unterseite angeordnet ist. Unter Beibehaltung der Orientierung der Grundplatte und insbesondere eines mit der Grundplatte zusammenwirkenden Führungs- und/oder Abstützsystems, insbesondere einer Führungsschiene, kann dann nämlich mit der Maschine sowohl in der einen als auch in der entgegengesetzten Richtung gearbeitet werden. Bei außermittiger Anordnung der Maschine besteht der Vorteil, dass im Falle einer Verschwenkbarkeit der Maschine diese mit ihrem oberhalb der Grundplatte angeordneten Maschinenteil- und damit ihrem Schwerpunkt - in Richtung der breiteren Auflagefläche und unterhalb der Grundplatte mit ihrem Werkzeug in Richtung der schmaleren Auflagefläche geschwenkt werden kann, womit in jeder Arbeitssituation ein randnahes Arbeiten ermöglicht wird. Die Umsetzbarkeit der Maschine ermöglicht also in Verbindung mit ihrer außermittigen Anordnung und ihrer Verschwenkbarkeit stets ein randnahes Arbeiten, und zwar in beiden Arbeitsrichtungen. Außerdem ist hierdurch in jeder denkbaren Arbeitssituation gleichzeitig die Kippsicherheit der Maschine sichergestellt, da diese stets ohne Beeinträchtigung des Bedienkomforts bzw. der Handhabbarkeit mit ihrem Schwerpunkt in Richtung der breiteren Auflagefläche gekippt werden kann.

Sofern eine Verschwenkbarkeit der Maschine vorgesehen ist, insbesondere durch entsprechende Ausbildung einer Schwenkeinrichtung an einer Maschinengrundplatte, kann eine hierfür vorgesehene Schwenkeinrichtung mit einer Rasteinrichtung versehen sein, die lediglich diskret verteilte Schwenkwinkel zulässt.

In einer bevorzugten Ausgestaltung sind aufeinanderfolgend einstellbare Schwenkwinkel aufgrund der Rasterung jeweils um 7,5° beabstandet. Eine derartige Teilung hat den Vorteil, dass Schwenkwinkel von 7,5°, 15°, 22,5°, 30°, 37,5° und 45° und somit alle in der Praxis wichtigen Maschinen- bzw. Werkzeugneigungen relativ zum Werkstück eingestellt werden können.

Dabei kann vorgesehen sein, dass zum Umschalten zwischen einer stufenlosen und einer diskreten Einstellung des Schwenkwinkels die Rasteinrichtung deaktivierbar ist.

In einem weiteren Ausführungsbeispiel ist vorgesehen, dass die Endlagen der Schwenkeinrichtung, die insbesondere Schwenkwinkeln von 0° und 45° entsprechen, einstellbar sind. Hierdurch wird eine besonders exakte Ausrichtung der Maschine ermöglicht.

Bei den nachstehend angegebenen Aspekten handelt es sich um mögliche Ausführungsformen zu den Gegenständen der unabhängigen Ansprüche.

Bei der Bearbeitungsmaschine kann vorgesehen sein, dass zumindest eine, insbesondere mit einer Schwenkeinrichtung für die Maschine versehene, Grundplatte an einander gegenüberliegenden Seiten jeweils mit einer Ausnehmung für ein Werkzeug der Maschine versehen ist.

Ferner kann bei der Bearbeitungsmaschine vorgesehen sein, dass die oder eine Grundplatte mit einer Schwenkeinrichtung für die Maschine, insbesondere zur Ausführung von Neigungs- oder Gehrungsschnitten, versehen ist.

Außerdem kann bei der Bearbeitungsmaschine vorgesehen sein, dass eine Schwenkeinrichtung für die Maschine mit einer lediglich diskret verteilte Schwenkwinkel zulassenden Rasteinrichtung versehen ist, wobei insbesondere mittels der Rasteinrichtung aufeinander folgend einstellbare Schwenkwinkel einen Abstand von 7,5° aufweisen.

Des Weiteren kann bei der Bearbeitungsmaschine vorgesehen sein, dass zum Umschalten zwischen einer stufenlosen und einer diskreten Einstellung des Schwenkwinkels die Rasteinrichtung deaktivierbar ist.

Ferner kann bei der Bearbeitungsmaschine vorgesehen sein, dass die, insbesondere Schwenkwinkeln von 0° und 45° entsprechenden, Endlagen der Schwenkeinrichtung einstellbar sind.

Außerdem kann bei der Bearbeitungsmaschine vorgesehen sein, dass zusätzlich ein Ausgleichselement vorgesehen ist, das bei mit einer Seite auf einer Führungsschiene aufliegender Grundplatte unter deren anderer Seite montierbar ist und eine ebene Unterseite aufweist, die mit der Unterseite der Führungsschiene in einer Ebene liegt.

Bei der Führungseinrichtung kann vorgesehen sein, dass die Höhendifferenz gleich der Dicke der Führungsschiene ist.

Ferner kann bei der Führungseinrichtung vorgesehen sein, dass die Auflageflächen des Auslegers in parallel zueinander versetzten Ebenen verlaufen.

Außerdem kann bei der Führungseinrichtung vorgesehen sein, dass in den Auflageflächen des Auslegers jeweils wenigstens eine Führungsnut für einen Führungssteg der Führungsschiene ausgebildet ist.

Des Weiteren kann bei der Führungseinrichtung vorgesehen sein, dass die Führungsnuten des Auslegers in zu den Auflageflächen senkrechten, voneinander beabstandete Ebenen verlaufen.

Außerdem kann bei der Führungseinrichtung vorgesehen sein, dass der Ausleger auf Umschlag verwendbar ist.

Ferner kann bei der Führungseinrichtung vorgesehen sein, dass der Ausleger wenigstens ein Kopplungselement, insbesondere eine Kopplungsstange, aufweist, das mit einem Ende mit der Maschine, insbesondere mit einer Grundplatte der Maschine, verbindbar ist und an seinem anderen Ende einen Auflageabschnitt trägt, an dem wenigstens eine ebene Auflagefläche ausgebildet ist.

Des Weiteren kann bei der Führungseinrichtung vorgesehen sein, dass der Ausleger wenigstens zwei in Arbeitsrichtung der Maschine mit Abstand voneinander angeordnete Kopplungselemente aufweist, die gemeinsam einen Auflageabschnitt tragen.

Außerdem kann bei der Führungseinrichtung vorgesehen sein, dass die Führungsschiene auf ihrer Oberseite wenigstens einen Führungssteg aufweist, wobei insbesondere wenigstens zwei senkrecht zu ihrer Längserstreckung mit Abstand voneinander angeordnete Führungsstege vorgesehen sind.

Die Erfindung wird im Folgenden beispielhaft unter Bezugnahme auf die Zeichnung beschrieben. Es zeigen:
- Fig. 1 bis 3: schematisch eine Ausführungsform eines erfindungs- gemäßen Bearbeitungssystems in verschiedenen Nut- zungskonfigurationen, und
- Fig. 4 und 5: schematisch eine weitere Ausführungsform eines er- findungsgemäßen Bearbeitungssystems in verschiede- nen Nutzungskonfigurationen.

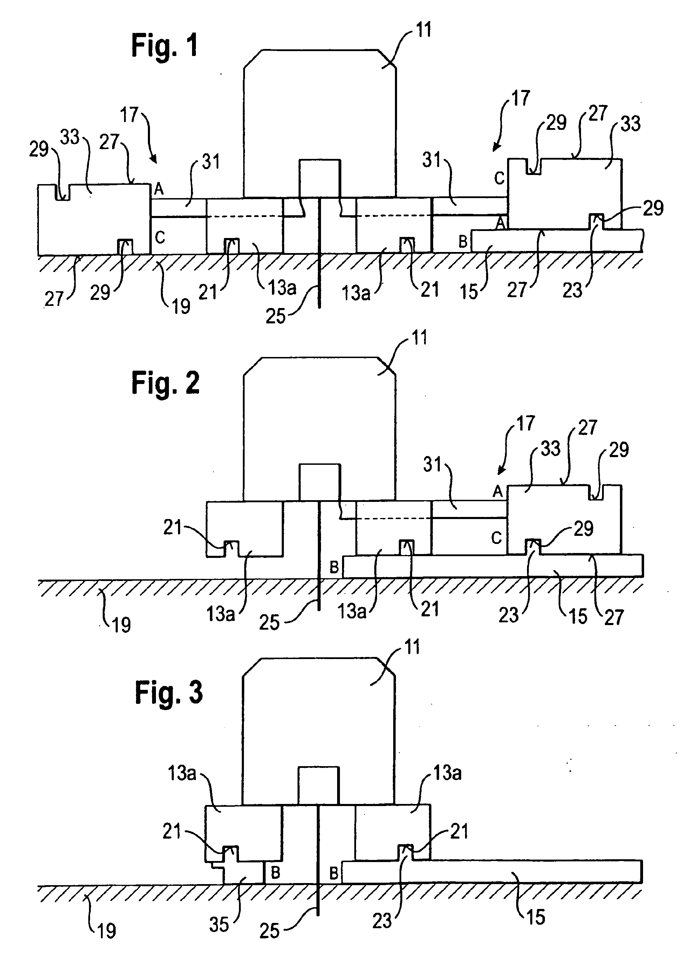

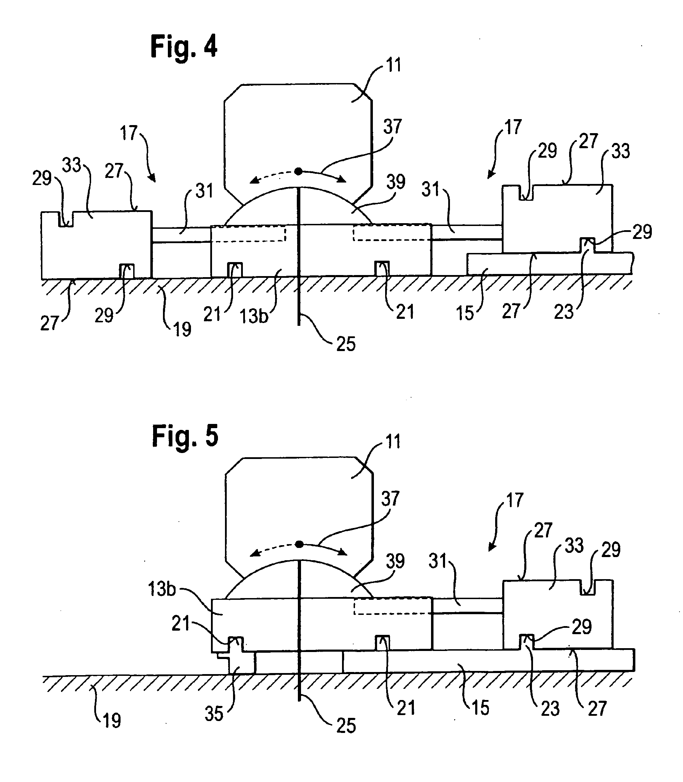

In den Fig. 1 bis 3 ist jeweils schematisch eine Stichsäge 11 in einer Ansicht von vorne dargestellt. Die Stichsäge 11 umfasst ein Werkzeug in Form eines Sägeblatts 25 und eine Grundplatte 13a. Die Stichsäge 11 ist mit der Grundplatte 13a lösbar verbunden. Hierzu ist eine nicht dargestellte Kopplungseinrichtung zwischen Maschine 11 und Grundplatte 13a vorgesehen. Diese Kopplungseinrichtung kann derart ausgestaltet sein, dass die Grundplatte 13a auf Umschlag verwendbar ist, d.h. unter Beibehaltung der Orientierung der Grundplatte 13a die Maschine 11 auch um 180'° gedreht mit der Grundplatte 13a gekoppelt werden kann, um ohne Änderung der Orientierung der Grundplatte 13a in die entgegengesetzte Richtung arbeiten zu können. Dies ist insbesondere dann sinnvoll, wenn die Maschine 11 verschwenkbar ist. Hierauf wird in Verbindung mit den Fig. 4 und 5 näher eingegangen.

In dem dargestellten Ausführungsbeispiel ist die Grundplatte 13a insofern symmetrisch ausgebildet, als das Sägeblatt 25 mittig zwischen zwei seitlichen Abschnitten der Grundplatte 13a angeordnet ist. Auf beiden Seiten des Werkzeugs 25 ist eine von der Unterseite der Grundplatte 13a gebildete Auflagefläche vorhanden. Anders als in dem Ausführungsbeispiel der Fig. 4 und 5 ist hier die Breite der Auflagefläche auf beiden Seiten des Werkzeugs 25 gleich groß.

Die Grundplatte 13a ist mit einer ebenen Unterseite versehen, wobei auf beiden Seiten des Sägeblatts 25 jeweils eine randnahe Führungsnut 21 ausgebildet ist. Diese Führungsnuten 21 dienen dazu, die Maschine 11 über die Grundplatte 13a unmittelbar an einer Führungsschiene 15 zu führen (vgl. Fig. 2 und Fig. 3), die hierzu an ihrer Oberseite mit einem Führungssteg 23 versehen ist.

Zu dem die Grundplatte 13a und die Führungsschiene 15 umfassenden Führungssystem gehört außerdem wenigstens ein auch als Parallelanschlag bezeichneter Ausleger 17, der beispielsweise zwei parallele, in Arbeitsrichtung der Maschine 11 mit Abstand voneinander angeordnete Kopplungsstangen 31 umfasst, die einen gemeinsamen Auflageabschnitt 33 tragen, auf den nachstehend näher eingegangen wird.

Mittels der Kopplungsstangen 31 ist der Ausleger mit der Grundplatte 13a und damit der Maschine 11 lösbar verbindbar. Der Ausleger 17 ist auf beiden Seiten der Maschine 11 verwendbar. Es ist prinzipiell auch möglich, mit zwei baugleichen Auslegern 17 zu arbeiten und die Maschine 11 auf beiden Seiten jeweils mit einem Ausleger 17 zu versehen. Fig. 1 zeigt eine solche Konfiguration, wobei Fig. 1 gleichzeitig auch die beidseitige Verwendbarkeit des Auslegers 17 zu entnehmen ist.

Der Auflageabschnitt 33 weist auf einander gegenüberliegenden Seiten jeweils eine ebene Auflagefläche 27 auf, wobei die beiden Auflageflächen 27 parallel zueinander verlaufen. In jeder Auflagefläche 27 ist eine Führungsnut 29 ausgebildet, über welche der Ausleger 27 mit der Führungsschiene 15 über deren Führungssteg 23 zusammenwirken kann. Auf diese Weise kann die Maschine 11 mittels des Auslegers 17 an der Führungsschiene 15 geführt werden. Die Führungsnuten 29 des Auslegers 17 liegen in parallel versetzt zueinander verlaufenden, jeweils zu den Auflageflächen 27 senkrechten Ebenen, d.h. die Führungsnuten 29 sind unterschiedlich weit von der Maschine 11 entfernt.

Eine Besonderheit des erfindungsgemäßen Auslegers 17 besteht darin, dass der Ausleger in zwei Orientierungen relativ zur Maschine 11 verwendet werden kann. In Bezug auf die Höhenrichtung ist der Auflageabschnitt 33 außermittig an seinen Kopplungselementen 31 angebracht. Hierdurch ergeben sich unterschiedliche Abstände A und C zwischen der jeweiligen Auflagefläche 27 und der in die gleiche Richtung wie diese Auflagefläche 27 weisenden Seite der Kopplungsstangen 31. Diese Abstände A und C, die Dicke B der Führungsschiene 15 sowie die Dicke der Grundplatte 13a unterhalb der Kopplungsstangen 31 des Auslegers 17 sind derart aufeinander abgestimmt, dass die beiden in Fig. 1 dargestellten Nutzungskonfigurationen möglich sind. Hierbei gilt A + B = C, wobei in einem möglichen Beispiel gilt: A = 2 mm, B = 6 mm und C = 8 mm.

Folglich kann die mit ihrer Grundplatte 13a auf der Oberfläche des Werkstücks 19 aufliegende Maschine 11 mittels des Auslegers 17 sowohl an der Führungsschiene 15 geführt (rechte Konfiguration in Fig. 1) als auch an der Oberfläche des Werkstücks 19 abgestützt werden (linke Konfiguration in Fig. 1).

Diese beiden Funktionen des Auslegers 17 können alternativ oder - unter Verwendung zweier insbesondere baugleicher Ausleger 17 - im Prinzip auch gleichzeitig genutzt werden.

Fig. 2 zeigt eine weitere durch das erfindungsgemäße Bearbeitungssystem ermöglichte Nutzungskonfiguration. Der Ausleger 17 befindet sich bezüglich der Maschine 11 in einer Konfiguration, die der in Fig. 1 linken Nutzungskonfiguration entspricht, d.h. die wirksame Auflagefläche 27 des Auslegers 17 liegt mit der Unterseite der Grundplatte 13a in einer Ebene. Die Führung der Maschine 11 mittels der Führungsschiene 15 erfolgt hier durch den Ausleger 17, während die eine Seite der Grundplatte 13a lediglich auf der Führungsschiene 15 aufliegt.

Generell ist zu bemerken, dass im Falle einer Führung der Maschine 11 an der Führungsschiene 15 mittels des Auslegers 17 der Abstand des Werkzeugs 25 der Maschine 11 zur Außenkante der Führungsschiene 15 aufgrund der Verstellbarkeit des Auslegers 17 bzw. dessen Auflageabschnitt 33 relativ zur Maschine 11 bedarfsgemäß eingestellt werden kann.

In der Nutzungskonfiguration gemäß Fig. 3 wird der Ausleger 17 nicht verwendet. Die Maschine 11 ist über ihre Grundplatte 13a einseitig an der Führungsschiene 15 geführt. Um die Dicke B der Führungsschiene 15 auszugleichen, ist ein Ausgleichsschuh 35 vorgesehen, der die wirksame Höhe des nicht auf der Führungsschiene 15 aufliegenden Bereiches der Grundplatte 13a vergrößert. Die wirksame Dicke B des Ausgleichsschuhs 35 entspricht somit der Dicke B der Führungsschiene 15.

Für die Befestigung des Ausgleichselementes 35 kann die ohnehin in der Grundplatte 13a ausgebildete Führungsnut 21 genutzt werden, wobei alternativ oder zusätzlich andere geeignete Befestigungsmittel möglich sind.

In dem Ausführungsbeispiel der Fig. 4 und 5 ist die Grundplatte 13b dazu ausgebildet, ein Verschwenken der Maschine 11 zu ermöglichen. Auf Einzelheiten der hierzu an der Grundplatte 13b ausgebildeten Schwenkeinrichtung 39 soll hier nicht näher eingegangen werden. Diesbezüglich wird auf die Ausführungen im Einleitungsteil verwiesen.

Die Verbindung zwischen Maschine 11 und Grundplatte 13b ist lösbar, d.h. die Maschine 11 kann wahlweise mit unterschiedlich ausgebildeten Grundplatten und dabei z.B. insbesondere entweder verschwenkbar oder nicht verschwenkbar eingesetzt werden.

Ein weiterer Unterschied zum Ausführungsbeispiel der Fig. 1 bis 3 besteht darin, dass hier die Maschine 11 außermittig auf der Grundplatte 13b angeordnet ist, so dass die auf beiden Seiten des Sägeblatts 25 vorhandenen Bereiche der von der Unterseite der Grundplatte 13b gebildeten Auflagefläche eine unterschiedliche Breite aufweisen.

Des Weiteren sind die Führungsnuten 21 auf der Unterseite der Grundplatte 13b asymmetrisch bezüglich des außermittig auf der Grundplatte 13b angeordneten Sägeblatts 25 positioniert. Dabei entspricht der Abstand der in Fig. 4 und 5 jeweils linken, also der in der schmaleren Auflagefläche der Grundplatte 13b ausgebildeten Führungsnut 21 von dem Sägeblatt 25 dem "normalen" Abstand, wie er z.B. im Ausführungsbeispiel der Fig. 1 bis 3 bezüglich der beiden dortigen Führungsnuten vorgesehen sein kann.

Die Nutzungskonfiguration gemäß Fig. 4 entspricht derjenigen der Fig. 1, so dass auf die diesbezüglichen Ausführungen verwiesen wird. Des Weiteren entspricht die Nutzungskonfiguration gemäß Fig. 5 derjenigen der Fig. 3, so dass wiederum auf die diesbezüglichen Ausführungen verwiesen wird.

Eine Besonderheit der Schwenk-Grundplatte 13b besteht darin, dass sie richtungsunabhängig, d.h. in beiden Richtungen, verwendbar ist. Hierzu ist die Kopplungseinrichtung zur lösbaren Koppelung der Maschine 11 an die Grundplatte 13b derart ausgebildet, dass die Maschine 11 in zwei um 180° gegeneinander verdrehten Orientierungen, d.h. in entgegen gesetzten Arbeitsrichtungen, an der Grundplatte 13b angebracht werden kann. Die Maschine 11 ist also "auf Umschlag" auf der Grundplatte 13b verwendbar.

Wenn man sich anhand von Fig. 4 und Fig. 5 jeweils vorstellt, dass die Arbeitsrichtung aus der Zeichenebene heraus weist, d.h. die Maschine 11 sich auf den Betrachter zu bewegt, dann kann die Maschine 11 im Uhrzeigersinn gemäß der Schwenkrichtung 39 geneigt werden, um Gehrungsschnitte auszuführen. Dabei wird die Maschine 11 in Schwenkrichtung 37 und somit in Richtung der breiteren Auflagefläche geneigt, so dass die Kippstabilität der Gesamtanordnung aus Maschine 11 und Grundplatte 13b gewährleistet ist.

Durch den gestrichelt dargestellten, gegen den Uhrzeigersinn gerichteten Pfeil ist jeweils angedeutet, dass die Schwenkeinrichtung 39 ausgehend von der dargestellten aufrechten Stellung mit einem Schwenkwinkel von 0° eine Neigung der Maschine 11 in beide Richtungen ermöglicht. Wichtig ist dies dann, wenn mit der Maschine 11 unter Beibehaltung der Orientierung der Grundplatte 13b in die entgegen gesetzte Richtung, also in Fig. 4 und Fig. 5 in die Zeichenebene hinein, gearbeitet und die Orientierung des

Gehrungsschnittes beibehalten werden soll. Hierzu wird die Maschine 11 auf der Grundplatte 13b umgesetzt und in den Fig. 4 und 5 vom Betrachter weg bewegt, wobei die Ansicht in beiden Fällen die Gleiche ist, da die schematischen Fig. 4 und 5 nicht zwischen der Vorderseite und der Rückseite der Maschine 11 unterscheiden und folglich gewissermaßen gleichzeitig beide Arbeitsrichtungen veranschaulichen.

Ein weiterer Vorteil der asymmetrischen Anordnung der Maschine 11 auf der Grundplatte 13b besteht darin, dass in jeder Arbeitssituation ein randnahes Arbeiten möglich ist.

### Bezugszeichenliste

- 11: Bearbeitungsmaschine, Stichsäge
- 13a: feste Grundplatte
- 13b: Grundplatte mit Schwenkeinrichtung
- 15: Führungsschiene
- 17: Ausleger, Parallelanschlag
- 19: Werkstück
- 21: Führungsnut der Grundplatte
- 23: Führungssteg der Führungsschiene
- 25: Werkzeug, Sägeblatt
- 27: Auflagefläche des Auslegers
- 29: Führungsnut des Auslegers
- 31: Kopplungselement des Auslegers
- 33: Auflageabschnitt des Auslegers
- 35: Ausgleichselement
- 37: Schwenkrichtung
- 39: Schwenkeinrichtung

- A: kleiner Abstand am Auflageabschnitt
- B: Dicke der Führungsschiene und des Ausgleichselementes
- C: großer Abstand am Auflageabschnitt

## Patentansprüche

1. Bearbeitungssystem
mit einer elektrischen Bearbeitungsmaschine (11), insbesondere einer Stichsäge, und
mit einem Führungssystem, das wenigstens eine Grundplatte (13a, 13b) der Maschine (11), zumindest eine Führungsschiene (15) und wenigstens einen mit der Maschine (11), insbesondere der Grundplatte (13a, 13b), koppelbaren, insbesondere als Parallelanschlag ausgebildeten, Ausleger (17) umfasst,
**dadurch gekennzeichnet,**
**dass** das Führungssystem derart ausgebildet ist, dass die Maschine (11) sowohl bei unmittelbar auf einem zu bearbeitenden Werkstück (19) aufliegender als auch bei unmittelbar auf der Führungsschiene (15) aufliegender Grundplatte (13a, 13b) in einer durch die Führungsschiene (15) geführten Weise betreibbar ist,
wobei der Ausleger (17) wenigstens zwei ebene Auflageflächen (27) aufweist und in wenigstens zwei Orientierungen relativ zur Maschine (11) verwendbar ist, die sich hinsichtlich der Höhendifferenz zwischen der Unterseite der Grundplatte (13a, 13b) und der jeweils wirksamen Auflagefläche (27) voneinander unterscheiden, wobei bevorzugt die Höhendifferenz gleich der Dicke der Führungsschiene (15) ist.

2. Bearbeitungssystem nach Anspruch 1,
**dadurch gekennzeichnet,**
**dass** die Grundplatte (13a, 13b) eine ebene Unterseite aufweist, in der wenigstens eine Führungsnut (21) für einen Führungssteg (23) der Führungsschiene (15) ausgebildet ist, und/oder dass die Grundplatte (13a, 13b) zwei mit Abstand voneinander angeordnete Führungsnuten (21) aufweist, wobei insbesondere die Führungsnuten (21) symmetrisch bezüglich eines, insbesondere mittig an der Maschine (11) angeordneten, Werkzeugs (25) der Maschine (11) oder asymmetrisch bezüglich eines, insbesondere außermittig an der Maschine (11) angeordneten, Werkzeugs (25) der Maschine (11) positioniert sind.

3. Bearbeitungssystem nach Anspruch 1 oder 2,
**dadurch gekennzeichnet,**
**dass** in einer Orientierung des Auslegers (17) dessen wirksame Auflagefläche (27) und die Unterseite der Grundplatte (13a, 13b) in einer Ebene liegen, und/oder dass die Auflageflächen (27) des Auslegers (17) in parallel zueinander versetzten Ebenen verlaufen.

4. Bearbeitungssystem nach einem der vorhergehenden Ansprüche,
**dadurch gekennzeichnet,**
**dass** in den Auflageflächen (27) des Auslegers (17) jeweils wenigstens eine Führungsnut (29) für einen Führungssteg (23) der Führungsschiene (15) ausgebildet ist, wobei bevorzugt die Führungsnuten (29) des Auslegers (17) in zu den Auflageflächen (27) senkrechten, voneinander beabstandete Ebenen verlaufen, so dass sich die Führungsnuten (29) hinsichtlich ihres Abstandes von der Maschine (11) voneinander unterscheiden.

5. Bearbeitungssystem nach einem der vorhergehenden Ansprüche,
**dadurch gekennzeichnet ,**
**dass** der Ausleger (17) auf beiden Seiten der Maschine (11) verwendbar ist und/oder dass der Ausleger (17) wenigstens ein Kopplungselement (31), insbesondere eine Kopplungsstange, aufweist, das mit einem Ende mit der Maschine (11), insbesondere mit der Grundplatte (13a, 13b), verbindbar ist und an seinem anderen Ende einen Auflageabschnitt (33) trägt, an dem wenigstens eine ebene Auflagefläche (27) ausgebildet ist und/ oder dass der Ausleger (17) wenigstens zwei in Arbeitsrichtung der Maschine (11) mit Abstand voneinander angeordnete Kopplungselemente (31) aufweist, die gemeinsam einen Auflageabschnitt (33) tragen und/oder dass zusätzlich ein Ausgleichselement (35) vorgesehen ist, das bei mit einer Seite auf der Führungsschiene (15) aufliegender Grundplatte (13a, 13b) unter deren anderer Seite montierbar ist und eine ebene Unterseite aufweist, die mit der Unterseite der Führungsschiene (15) in einer Ebene liegt.

6. Bearbeitungssystem nach einem der vorhergehenden Ansprüche,
**dadurch gekennzeichnet ,**
**dass** eine Mehrzahl von Grundplatten (13a, 13b) vorgesehen ist, die jeweils lösbar mit der Maschine (11) koppelbar sind, wobei insbesondere die Koppelung zwischen Maschine (11) und Grundplatte (13a, 13b) dazu ausgebildet ist, die Maschine (11) wahlweise in zwei unterschiedlichen, entgegengesetzten Arbeitsrichtungen entsprechenden Orientierungen relativ zur Grundplatte (13a, 13b) zu verwenden.

7. Bearbeitungssystem nach einem der vorhergehenden Ansprüche,
**dadurch gekennzeichnet,**
**dass** zumindest eine, insbesondere mit einer Schwenkeinrichtung für die Maschine (11) versehene, Grundplatte (13b) an einander gegenüberliegenden Seiten jeweils mit einer Ausnehmung für ein Werkzeug (25) der Maschine (11) versehen ist und/oder dass die oder eine Grundplatte (13b) mit einer Schwenkeinrichtung für die Maschine (11), insbesondere zur Ausführung von Neigungs- oder Gehrungsschnitten, versehen ist.

8. Bearbeitungssystem nach einem der vorhergehenden Ansprüche,
**dadurch gekennzeichnet,**
**dass** eine Schwenkeinrichtung für die Maschine (11) mit einer lediglich diskret verteilte Schwenkwinkel zulassenden Rasteinrichtung versehen ist, wobei bevorzugt mittels der Rasteinrichtung aufeinander folgend einstellbare Schwenkwinkel einen Abstand von 7,5° aufweisen.

9. Bearbeitungssystem nach Anspruch 7 oder 8,
**dadurch gekennzeichnet,**
**dass** zum Umschalten zwischen einer stufenlosen und einer diskreten Einstellung des Schwenkwinkels die Rasteinrichtung deaktivierbar ist und/oder dass die, insbesondere Schwenkwinkeln von 0° und 45° entsprechenden, Endlagen der Schwenkeinrichtung einstellbar sind.

10. Bearbeitungssystem nach einem der vorhergehenden Ansprüche,
**dadurch gekennzeichnet,**
**dass** die Grundplatte (13b) eine ebene Unterseite aufweist, wobei ein Werkzeug (25) der Maschine (11) derart außermittig bezüglich der Grundplatte (13b) angeordnet ist, dass auf beiden Seiten des Werkzeugs (25) ein als Auflagefläche dienender Bereich der Unterseite der Grundplatte (13b) vorhanden ist, wobei die Auflagefläche auf der einen Seite des Werkzeugs (25) breiter ist als auf der anderen Seite des Werkzeugs (25).

11. Führungseinrichtung für eine elektrische Bearbeitungsmaschine (11), insbesondere eine Stichsäge,
mit zumindest einer Führungsschiene (15) und wenigstens einem mit der Maschine (11), insbesondere einer Grundplatte (13a, 13b) der Maschine (11), koppelbaren, insbesondere als Parallelanschlag ausgebildeten, Ausleger (17),
wobei der Ausleger (17) wenigstens zwei ebene Auflageflächen (27) aufweist und in wenigstens zwei Orientierungen relativ zur Führungsschiene (15) verwendbar ist, die sich hinsichtlich der Höhendifferenz zwischen der Unterseite der Führungsschiene (15) und der jeweils wirksamen Auflagefläche (27) voneinander unterscheiden.

## Claims

1. A processing system
having an electric processing machine (11), in particular a jigsaw, and
having a guide system which includes at least one base plate (13a, 13b) of the machine (11), at least one guide rail (15) and at least one boom (17) which can be coupled to the machine (11), in particular to the base plate (13a, 13b), and which is in particular configured as a parallel abutment,
**characterised in that**
the guide system is configured such that the machine (11) can be operated in a manner guided by the guide rail (15) both with a base plate (13a, 13b) lying directly on a workpiece (19) to be machined and with a base plate (13, 13b) lying directly on the guide rail (15), wherein the boom (17) has at least two planar support surfaces (27) and can be used in at least two orientations relative to the machine (11) which differ from one another with respect to the vertical difference between the lower side of the base plate (13a, 13b) and the respective effective support surface (27), wherein the vertical difference is preferably equal to the thickness of the guide rail (15).

2. A processing system in accordance with claim 1,
**characterised in that**
the base plate (13a, 13b) has a planar lower side in which at least one guide groove (21) is formed for a guide web (23) of the guide rail (15); and/or **in that** the base plate (13a, 13b) has two guide grooves (21) arranged spaced apart from one another, wherein in particular the guide grooves (21) are positioned symmetrically with respect to a tool (25) of the machine (11), in particular arranged centrally at the machine (11), or are positioned asymmetrically with respect to a tool (25) of the machine (11), in particular arranged off-centre at the machine (11).

3. A processing system in accordance with claim 1 or claim 2,
**characterised in that**,
in an orientation of the boom (17), its effective support surface (27) and the lower side of the base plate (13a, 13b) lie in a plane; and/or in that the support surfaces (27) of the boom (17) extend in planes offset parallel to one another.

4. A processing system in accordance with any one of the preceding claims,
**characterised in that**
at least one respective guide groove (29) for a guide web (23) of the guide rail (15) is formed in the support surfaces (27) of the boom (17), wherein the guide grooves (29) of the boom (17) preferably extend in planes perpendicular to the support surfaces (27) and spaced apart from one another so that the guide grooves (29) differ from one another with respect to their spacing from the machine (11).

5. A processing system in accordance with any one of the preceding claims,
**characterised in that**
the boom (17) can be used at both sides of the machine (11); and/or in that the boom (17) has at least one coupling element (31), in particular a coupling rod, which can be connected at one end to the machine (11), in particular to the base plate (13a, 13b), and at its other end carries a support section (33) at which at least one planar support surface (27) is formed; and/or **in that** the boom (17) has at least two coupling elements (31) which are arranged spaced apart from one another in the working direction of the machine (11) and which together carry a support section (33); and/or **in that** a compensation element (35) is additionally provided which, when the base plate (13a, 13b) is lying with one side on the guide rail (15), can be mounted beneath its other side and which has a planar lower side which lies in a plane with the lower side of the guide rail (15).

6. A processing system in accordance with any one of the preceding claims, **characterized in that**
a plurality of base plates (13a, 13b) are provided which can each be releasably coupled to the machine (11), wherein in particular the coupling between the machine (11) and the base plate (13a, 13b) is configured to use the machine (11) selectively in two different orientations, corresponding to opposite working directions, relative to the base plate (13a, 13b).

7. A processing system in accordance with any one of the preceding claims, **characterized in that**
at least one base plate (13b), in particular provided with a pivot device for the machine (11), is provided at mutually opposite sides in each case with a cut-out for a tool (25) of the machine (11); and/or **in that** the or one base plate (13b) is provided with a pivot device for the machine (11), in particular for carrying out slanted cuts or mitre cuts.

8. A processing system in accordance with any one of the preceding claims, **characterized in that**
a pivot device for the machine (11) is provided with a latch device only permitting discretely distributed pivot angles, wherein pivot angles adjustable after one another by means of the latch device preferably have a spacing of 7.5°.

9. A processing system in accordance with claim 7 or claim 8,
**characterised in that**
the latch device can be deactivated for switching between a stepless setting and a discrete setting of the pivot angle; and/or **in that** the end positions of the pivot device can be set which in particular correspond to pivot angles of 0° and 45°.

10. A processing system in accordance with any one of the preceding claims,
**characterised in that**
the base plate (13b) has a planar lower side, wherein a tool (25) of the machine (11) is arranged off-centre with respect to the base plate (13b) such that a region of the lower side of the base plate (13b) serving as a support surface is present on both sides of the tool (25), wherein the support surface is wider on the one side of the tool (25 than on the other side of the tool (25).

11. A guide device for an electric machine tool (11), in particular a jigsaw,
having at least one guide rail (15) and at least one boom (17) which can be coupled to the machine (11), in particular to a base plate (13a, 13b) and which is in particular configured as a parallel abutment,
wherein the boom (17) has at least two planar support surfaces (27) and can be used in at least two orientations relative to the guide rail (15) which differ from one another with respect to the vertical difference between the lower side of the guide rail (15) and the respective effective support surface (27).

## Revendications

1. Système d'usinage, comprenant
une machine d'usinage électrique (11), en particulier une scie sauteuse, et
un système de guidage, qui comprend au moins une plaque de base (13a, 13b) de la machine (11), au moins un rail de guidage (15), et au moins un bras en porte-à-faux (17), susceptible d'être accouplé avec la machine (11), en particulier avec la plaque de base (13a, 13b), réalisé en particulier sous forme de butée parallèle,
**caractérisé en ce que**
le système de guidage est réalisé de telle façon que la machine (11) peut être amenée à fonctionner aussi bien lorsque la plaque de base (13a, 13b) repose directement sur une pièce à oeuvrer (19) que lorsqu'elle repose directement sur le rail de guidage (15), d'une manière guidée par le rail de guidage,
dans lequel le bras en porte-à-faux (17) comporte au moins deux surfaces d'appui planes (27) et est utilisable dans au moins deux orientations par rapport à la machine (11), qui se distinguent l'une de l'autre pour ce qui concerne la différence en hauteur entre la face inférieure de la plaque de base (13a, 13b) et la surface d'appui (27) respectivement active, et de préférence la différence en hauteur est égale à l'épaisseur du rail de guidage (15).

2. Système d'usinage selon la revendication 1,
**caractérisé en ce que** la plaque de base (13a, 13b) comporte une face inférieure plane, dans laquelle est ménagée au moins une gorge de guidage (21) pour une barrette de guidage (23) du rail de guidage (15), et/ou **en ce que** la plaque de base (13a, 13b) comporte deux gorges de guidage (21) agencées à distance l'une de l'autre, lesdites gorges de guidage (21) étant en particulier positionnées symétriquement par référence à un outil (25) de la machine (11), lequel est agencé en particulier au milieu sur la machine (11), ou asymétriquement par référence à un outil (25) de la machine (11), lequel est agencé en particulier de façon décentrée sur la machine (11).

3. Système d'usinage selon la revendication 1 ou 2,
**caractérisé en ce que** dans une orientation du bras en porte-à-faux (17), sa surface d'appui active (27) et la face inférieure de la plaque de base (13a, 13b) sont disposées dans un plan, et/ou **en ce que** les surfaces d'appui (27) du bras en porte-à-faux (17) s'étendent dans des plans décalés parallèlement l'un par rapport à l'autre.

4. Système d'usinage selon l'une des revendications précédentes,
**caractérisé en ce qu'**au moins une gorge de guidage (29) respective, pour une barrette de guidage (23) du rail de guidage (15), est réalisée dans les surfaces d'appui (27) du bras en porte-à-faux (17), et de préférence les gorges de guidage (29) du bras en porte-à-faux (17) s'étendent dans des plans écartés l'un de l'autre et perpendiculaires aux surfaces d'appui (27), de sorte que les gorges de guidage (29) diffèrent l'une de l'autre pour ce qui concerne leur distance depuis la machine (11).

5. Système d'usinage selon l'une des revendications précédentes,
**caractérisé en ce que** le bras en porte-à-faux (17) est utilisable sur les deux côtés de la machine (11) et/ou **en ce que** le bras en porte-à-faux (17) comprend au moins un élément de couplage (31), en particulier une barre de couplage qui est susceptible d'être reliée par une extrémité avec la machine (11), en particulier avec la plaque de base (13a, 13b), et qui porte à son autre extrémité un tronçon d'appui (33), sur lequel est réalisée au moins une surface d'appui plane (27), et/ou **en ce que** le bras en porte-à-faux (17) comprend au moins deux éléments de couplage (31) agencés à distance l'un de l'autre dans la direction de travail de la machine (11), qui portent conjointement un tronçon d'appui (33), et/ou en ce qu'il est prévu en supplément un élément de compensation (35) qui, lorsque la plaque de base (13a, 13b) s'appuie par un côté sur le rail de guidage (15), est susceptible d'être monté sous son autre côté, et présente une face inférieure plane qui est située dans un plan avec la face inférieure du rail de guidage (15).

6. Système d'usinage selon l'une des revendications précédentes,
**caractérisé en ce qu'**il est prévu une pluralité de plaques de base (13a, 13b), lesquelles peuvent être respectivement accouplées de façon détachable avec la machine (11), et l'accouplement entre la machine (11) et la plaque de base (13a, 13b) est réalisé afin d'utiliser la machine (11) au choix dans deux orientations différentes, correspondant à des directions de travail opposées, par rapport à la plaque de base (13a, 13b).

7. Système d'usinage selon l'une des revendications précédentes,
**caractérisé en ce qu'**au moins une plaque de base (13b), dotée en particulier d'un moyen de pivotement pour la machine (11), est pourvue sur ses côtés mutuellement opposés d'un évidement respectif pour un outil (25) de la machine (11), et/ou **en ce que** la plaque de base (13b) ou une plaque de base (13b) est pourvue d'un moyen de pivotement pour la machine (11), en particulier pour exécuter des coupes inclinées ou des coupes à onglets.

8. Système d'usinage selon l'une des revendications précédentes,
**caractérisé en ce qu'**un moyen de pivotement pour la machine (11) est pourvu d'un dispositif à enclenchement qui permet uniquement des angles de pivotement répartis de façon discrète, et les angles de pivotement susceptibles d'être réglés en succession au moyen du dispositif à enclenchement présentent de préférence un écart de 7,5°.

9. Système d'usinage selon la revendication 7 ou 8,
**caractérisé en ce que** pour commuter entre un réglage en continu et un réglage discret de l'angle de pivotement, le dispositif d'enclenchement est susceptible d'être désactivé, et/ou **en ce que** les positions finales du moyen de pivotement sont réglables, en particulier en correspondance d'angles de pivotement de 0° et de 45°.

10. Système d'usinage selon l'une des revendications précédentes,
**caractérisé en ce que** la plaque de base (13b) présente une face inférieure plane, et un outil (25) de la machine (11) est agencé de façon décentrée par rapport à la plaque de base (13b), de telle manière qu'il existe sur les deux côtés de l'outil (25) une zone de la face inférieure de la plaque de base (13b) servant de surface d'appui, ladite surface d'appui étant plus large sur un côté de l'outil (25) que sur l'autre côté de l'outil (25).

11. Système de guidage pour une machine d'usinage électrique (11), en particulier une scie sauteuse,
comprenant au moins un rail de guidage (15), et au moins un bras en porte-à-faux (17) susceptible d'être accouplé avec la machine (11), en particulier avec une plaque de base (13a, 13b) de la machine (11), et réalisé en particulier sous forme de butée parallèle,
dans lequel le bras en porte-à-faux (17) comporte au moins deux surfaces d'appui planes (27), et est utilisable dans au moins deux orientations par rapport au rail de guidage (15), qui se distinguent l'une de l'autre pour ce qui concerne la différence en hauteur entre la face inférieure du rail de guidage (15) et la surface d'appui (27) respectivement active.
